# EUROPÄISCHE PATENTANMELDUNG

(11) **EP 3 339 996 A1**
(43) Veröffentlichungstag der Anmeldung: **27.06.2018**
(21) Anmeldenummer: 16206230.1
(22) Anmeldetag: 22.12.2016
(51) Int. Cl.: G05B 23/02, G06K 19/06, B25F 5/00

(54) **GERÄTESYSTEM MIT EINEM WERKZEUG- ODER MESSGERÄT**

(71) Anmelder: HILTI Aktiengesellschaft, 9494 Schaan (LI)
(72) Erfinder: Sojic, Ivan, 9470 Buchs (CH); Kaneider, Wilfried, 6830 Rankweil (AT)
(74) Vertreter: Hilti Aktiengesellschaft Corporate Intellectual Property

(57) **Zusammenfassung**

Gerätesystem mit einem Werkzeuggerät oder einem Messgerät, aufweisend eine Antriebseinrichtung, die ein Bearbeitungswerkzeug antreibt, oder eine Messeinrichtung, die ein Messmittel betreibt, eine Kontrollvorrichtung mit einer Steuer- und/oder Regeleinrichtung, die mindestens ein Betriebsprogramm zur Steuerung und/oder Regelung der Antriebseinrichtung des Werkzeuggerätes oder der Messeinrichtung des Messgerätes aufweist, und eine Eingabeeinrichtung (72), die zur Eingabe von Betriebsparametern für das mindestens eine Betriebsprogramm und/oder zum Ein- und Ausschalten des Werkzeug- oder Messgerätes ausgebildet ist. Die Kontrollvorrichtung des Gerätesystems weist einen QR-Code-Generator auf, der aktuelle Daten des Werkzeug- oder Messgerätes und/oder Zusatzinformationen in einen QR-Code verschlüsselt.

## Beschreibung

### Technisches Gebiet

Die vorliegende Erfindung betrifft ein Gerätesystem mit einem Werkzeug- oder Messgerät gemäß dem Oberbegriff des Anspruchs 1 sowie ein Verfahren zur Überwachung eines Gerätesystems gemäß dem Oberbegriff des Anspruchs 7.

### Stand der Technik

DE 10 2013 206 166 A1 offenbart ein Gerätesystem mit einem tragbaren Werkzeuggerät. Das Gerätesystem umfasst eine Antriebseinrichtung, die ein Bearbeitungswerkzeug antreibt, eine Kontrollvorrichtung mit einer Steuer- und/oder Regeleinrichtung, die mindestens ein Betriebsprogramm zur Steuerung und/oder Regelung der Antriebseinrichtung des Werkzeuggerätes aufweist, und eine Eingabeeinrichtung, die zur Eingabe von Betriebsparametern für das mindestens eine Betriebsprogramm ausgebildet ist. Um das mindestens eine Betriebsprogramm an das Bearbeitungswerkzeug und das Verbrauchsmaterial anpassen zu können, werden Kenngrößen für das Bearbeitungswerkzeug und/oder das Verbrauchsmaterial ermittelt. Die Kenngrößen des Bearbeitungswerkzeuges und/oder des Verbrauchsmaterials sind codiert, beispielsweise mittels eines Strichcodes und/oder eines QR-Codes oder alternativ mittels eines RFID-Codes und/oder eines NFC-Codes. Zu den Kenngrößen zählen beispielsweise die Art oder der Typ des Bearbeitungswerkzeuges (Diamantbohrer) oder eine Betriebsdrehzahl des Bearbeitungswerkzeuges abhängig vom zu bearbeitenden Werkstoff (Beton mit oder ohne Armierungseisen).

Die Kontrollvorrichtung umfasst neben der Steuer- und/oder Regeleinrichtung eine Erfassungseinrichtung und eine Schnittstelleneinrichtung, die die Steuer- und/oder Regeleinrichtung und die Erfassungseinrichtung zur Übertragung von Daten miteinander verbindet. Die Erfassungseinrichtung umfasst eine Ausleseeinrichtung zum Auslesen einer codierten Kenngröße des Bearbeitungswerkzeuges und/oder oder des Verbrauchsmaterials. Die Ausleseeinrichtung ist an einer Außenseite des Gerätegehäuses des Werkzeuggerätes angebracht oder die Ausleseeinrichtung ist im Bereich der Werkzeugaufnahme oder an der Werkzeugaufnahme für das Bearbeitungswerkzeug vorgesehen. Die Ausleseeinrichtung ist als Barcode- und/oder QR-Code-Ausleseeinrichtung oder alternativ als RFID- und/oder NFC-Code-Ausleseeinrichtung ausgebildet. Die Steuer- und/oder Regeleinrichtung umfasst eine Auswerteeinrichtung, die die von der Erfassungseinrichtung erfasste Kenngröße des Bearbeitungswerkzeuges oder des Verbrauchsmaterials auswertet und das Betriebsprogramm in Abhängigkeit von der Kenngröße anpasst.

### Darstellung der Erfindung

Die Aufgabe der vorliegenden Erfindung besteht darin, die Überwachung und Bedienung eines Gerätesystems mit einem Werkzeuggerät oder einem Messgerät für den Bediener zu erleichtern. Dabei soll der apparative Aufwand für die Überwachung möglichst gering gehalten werden.

Diese Aufgabe wird bei dem eingangs genannten Gerätesystem mit einem Werkzeug- oder Messgerät erfindungsgemäß durch die Merkmale des unabhängigen Anspruchs 1 und bei dem eingangs genannten Verfahren zur Überwachung eines Gerätesystems durch die Merkmale des unabhängigen Anspruchs 7 gelöst. Vorteilhafte Weiterbildungen sind in den abhängigen Ansprüchen angegeben.

Erfindungsgemäß ist vorgesehen, dass die Kontrollvorrichtung des Gerätesystems einen QR-Code-Generator aufweist, der aktuelle Daten des Werkzeug- oder Messgerätes und/oder Zusatzinformationen in einen QR-Code verschlüsselt. Dadurch, dass der QR-Code-Generator in die Kontrollvorrichtung des Gerätesystems integriert ist, kann bei dem erfindungsgemäßen Gerätesystem ein dynamischer QR-Code generiert werden, der aktuelle Daten des Werkzeug- oder Messgerätes und/oder Zusatzinformationen enthält. Das erfindungsgemäße Gerätesystem nutzt den Umstand, dass die Nutzung von QR-Codes stark verbreitet ist und Mobilgeräte heute nahezu standardmäßig mit Digitalkameras ausgestattet und entsprechende Softwareapplikationen zum Entschlüsseln von QR-Codes verfügbar sind. Bei Gerätesystemen mit Werkzeug- oder Messgeräten, die keine externe Kommunikationsschnittstelle aufweisen, können QR-Codes und vorhandene Mobilgeräte die fehlende Kommunikationsschnittstelle ausgleichen und den Bediener bei der Überwachung des Gerätesystems unterstützen.

Das erfindungsgemäße Gerätesystem umfasst ein Werkzeuggerät oder ein Messgerät. Bei einem Gerätesystem mit Werkzeuggerät sind eine Antriebseinrichtung, die ein Bearbeitungswerkzeug des Werkzeuggerätes antreibt, eine Kontrollvorrichtung mit einer Steuer- und/oder Regeleinrichtung und eine Eingabeeinrichtung zur Eingabe von Betriebsparametern für ein Betriebsprogramm des Werkzeuggerätes vorhanden. Bei einem Gerätesystem mit Messgerät sind eine Messeinrichtung, die ein Messmittel des Messgerätes betreibt, eine Kontrollvorrichtung mit einer Steuer- und/oder Regeleinrichtung und eine Eingabeeinrichtung zur Eingabe von Betriebsparametern für ein Betriebsprogramm des Messgerätes vorhanden.

Ein vom QR-Code-Generator generierter QR-Code kann auf unterschiedliche Weise ausgewertet werden, wobei die technische Ausstattung des Gerätesystems berücksichtigt werden kann. Bei der technischen Ausstattung der Gerätesysteme kann zwischen Gerätesystemen mit einem Display, einer Speichereinrichtung und/oder einer Schnittstelleneinrichtung unterschieden werden.

In einer ersten bevorzugten Weiterentwicklung weist das Gerätesystem ein Display auf, wobei das Display mit der Kontrollvorrichtung dauerhaft verbunden oder zumindest zeitweise verbindbar ist und der QR-Code auf dem Display darstellbar ist. Beim Display kann zwischen einem internen Display des Gerätesystems und einem externen Display unterschieden werden. Gerätesysteme mit einer Fernbedienung weisen in der Regel ein Display auf, das einen QR-Code darstellen kann. Bei Gerätesystemen ohne internes Display kann ein externes Display, beispielsweise ein Bildschirm, mit dem Gerätesystem verbunden werden. Der Bediener kann den auf dem Display dargestellten QR-Code mit einem Smartphone, einem Tablet-Computer oder einem anderen geeigneten Lesegerät mit QR-Code-Leseeinrichtung einscannen und anschließend mit einer handelsüblichen QR-Code-Auswerteeinrichtung entschlüsseln.

In einer zweiten bevorzugten Weiterentwicklung weist das Gerätesystem eine Speichereinrichtung auf, wobei die Speichereinrichtung mit der Kontrollvorrichtung dauerhaft verbunden oder zumindest zeitweise verbindbar ist. Bei Gerätesystemen mit einer Speichereinrichtung kann die Speichereinrichtung genutzt werden, um den QR-Code zu speichern. Das Speichern der QR-Codes in einer Speichereinrichtung bietet sich an, um durchgeführte Aufträge oder die Tagesleistung des Gerätesystems zu dokumentieren.

In einer dritten bevorzugten Weiterentwicklung weist das Gerätesystem eine Schnittstelleneinrichtung auf, die mit der Kontrollvorrichtung verbunden ist, wobei die Kontrollvorrichtung über die Schnittstelleneinrichtung mit einer Recheneinrichtung verbindbar ist. Wenn das Gerätesystem eine Schnittstelleneinrichtung aufweist, kann der QR-Code über die Schnittstelleneinrichtung an eine Recheneinrichtung übertragen werden. Die Recheneinrichtung kann als Smartphone, Tablet-Computer, Notebook oder PC ausgebildet sein. Die Recheneinrichtung ist in der Regel ebenfalls mit einer Schnittstelleneinrichtung ausgestattet.

Bevorzugt weist die Eingabeeinrichtung mindestens ein QR-Code-Auslöseelement auf, wobei dem mindestens einen QR-Code-Auslöseelement ein voreingestellter Satz von Daten des Werkzeug- oder Messgerätes und/oder Zusatzinformationen zugeordnet ist. Die Eingabeeinrichtung des Gerätesystems weist mindestens ein QR-Code-Auslöseelement auf, über das der Bediener einen QR-Code erzeugen lassen kann. Die Entscheidung, welche Daten des Werkzeug- oder Messgerätes und/oder Zusatzinformationen beim Betätigen des QR-Code-Auslöseelementes verschlüsselt werden, wird vorab festgelegt.

Besonders bevorzugt weist die Eingabeeinrichtung ein erstes QR-Code-Auslöseelement und ein zweites QR-Code-Auslöseelement auf, wobei dem ersten QR-Code-Auslöseelement ein erster Satz von Daten des Werkzeug- oder Messgerätes und/oder erste Zusatzinformationen zugeordnet ist und dem zweiten QR-Code-Auslöseelement ein zweiter Satz von Daten des Werkzeug- oder Messgerätes und/oder zweite Zusatzinformationen zugeordnet ist. Das Auftreten eines Fehlerzustandes beim Betrieb des Werkzeug- oder Messgerätes kann dazu führen, dass ein Dialogfeld erscheint und der Bediener entscheiden kann, ob ein QR-Code ausgegeben werden soll. Dem ersten QR-Code-Auslöseelement sind erste Daten des Werkzeug-oder Messgerätes und/oder erste Zusatzinformationen zugeordnet und dem zweiten QR-Code-Auslöseelement sind zweite Daten des Werkzeug-oder Messgerätes und/oder zweite Zusatzinformationen zugeordnet. Die Entscheidung, welche Daten des Werkzeug-oder Messgerätes und/oder Zusatzinformationen beim Betätigen des ersten oder zweiten QR-Code-Auslöseelementes verschlüsselt werden, wird vorab festgelegt.

Erfindungsgemäß weist das Verfahren zur Überwachung eines Gerätesystems, das ein Werkzeuggerät mit einer Antriebseinrichtung oder ein Messgerät mit einer Messeinrichtung umfasst, die Schritte auf:
▪ in einer Kontrollvorrichtung des Gerätesystems wird mindestens eine Auslösebedingung zum Erzeugen eines QR-Codes durch einen QR-Code-Generator gespeichert und
▪ bei Eintreten der mindestens einen Auslösebedingung wird ein voreingestellter Satz von aktuellen Daten des Werkzeug- oder Messgerätes und/oder Zusatzinformationen vom QR-Code-Generator der Kontrollvorrichtung in einem QR-Code verschlüsselt.

In der Kontrollvorrichtung des Gerätesystems wird eine Auslösebedingung gespeichert. Bei Eintreten der Auslösebedingung werden aktuelle Daten des Werkzeug- oder Messgerätes und/oder Zusatzinformationen vom QR-Code-Generator der Kontrollvorrichtung in einem QR-Code verschlüsselt. Das erfindungsgemäße Verfahren nutzt den Umstand, dass die Nutzung von QR-Codes stark verbreitet ist und Mobilgeräte heute standardmäßig mit Digitalkameras ausgestattet sind und über entsprechende Softwareapplikationen zum Entschlüsseln von QR-Codes verfügbar sind. Bei Gerätesystemen mit Werkzeug- oder Messgeräten, die keine Schnittstelleneinrichtung aufweisen, können QR-Codes und vorhandene Mobilgeräte die fehlende Schnittstelleneinrichtung ausgleichen und den Bediener bei der Überwachung des Gerätesystems unterstützen.

In einer ersten bevorzugten Weiterentwicklung wird der QR-Code an ein Display des Gerätesystems, das mit der Kontrollvorrichtung dauerhaft verbunden oder zumindest zeitweise verbindbar ist, übermittelt und auf dem Display grafisch dargestellt. Gerätesysteme mit einer Fernbedienung weisen in der Regel ein Display auf, das einen QR-Code darstellen kann. Bei Gerätesystemen ohne internes Display kann ein externes Display, beispielsweise ein Bildschirm, mit dem Gerätesystem verbunden werden.

Besonders bevorzugt wird der auf dem Display grafisch dargestellte QR-Code mittels einer QR-Code-Leseeinrichtung gescannt und der gescannte QR-Code wird von einer QR-Code-Auswerteeinrichtung entschlüsselt. Der Bediener nutzt seine vorhandenen Mobilgeräte und standardmäßigen Applikationen, um den QR-Code einzuscannen und zu entschlüsseln, so dass der apparative Aufwand reduziert ist.

In einer zweiten bevorzugten Weiterentwicklung wird der QR-Code an eine Speichereinrichtung des Gerätesystems, die mit der Kontrollvorrichtung dauerhaft verbunden oder zumindest zeitweise verbindbar ist, übermittelt und in der Speichereinrichtung gespeichert. Bei Gerätesystemen mit einer Speichereinrichtung kann die Speichereinrichtung genutzt werden, um den QR-Code zu speichern. Das Speichern der QR-Codes in einer Speichereinrichtung bietet sich an, um durchgeführte Aufträge oder die Tagesleistung des Gerätesystems zu dokumentieren.

In einer dritten bevorzugten Weiterentwicklung wird der QR-Code über eine Schnittstelleneinrichtung des Gerätesystems, die mit der Kontrollvorrichtung verbunden ist, an eine Recheneinrichtung übermittelt. Wenn das Gerätesystem eine Schnittstelleneinrichtung aufweist, kann der QR-Code über die Schnittstelleneinrichtung an eine Recheneinrichtung übertragen werden, die beispielsweise als Smartphone, Tablet-Computer, Notebook oder PC ausgebildet und ebenfalls mit einer Schnittstelleneinrichtung ausgestattet ist. Der QR-Code kann bei einem Fehlerzustand des Werkzeug- oder Messgerätes einen Hyperlink als Zusatzinformation beinhalten, wobei die dem Hyperlink zugeordnete Internetseite den Fehlerzustand beschreiben und Maßnahmen zur Fehlerbehebung vorschlagen kann. Moderne Recheneinrichtungen weisen in der Regel eine Internetverbindung auf, so dass der Bediener direkt mit der Fehlerbehebung beginnen kann.

Bevorzugt werden in der Kontrollvorrichtung des Gerätesystems eine erste Auslösebedingung und eine zweite Auslösebedingung gespeichert, wobei der ersten Auslösebedingung ein erster Satz von Daten des Werkzeug- oder Messgerätes und/oder erste Zusatzinformationen zugeordnet werden und der zweiten Auslösebedingung ein zweiter Satz von Daten des Werkzeug- oder Messgerätes und/oder zweite Zusatzinformationen zugeordnet werden. Fehlerzustände eines Werkzeug-oder Messgerätes stellen wichtige Auslöseereignisse für das erfindungsgemäße Verfahren dar und QR-Codes können den Bediener bei der Fehlerbehebung unterstützen. Bei Auftreten eines Fehlerzustandes kann automatisch ohne Eingriff des Bedieners vom QR-Code-Generator ein QR-Code erzeugt werden, wobei im QR-Code aktuelle Daten des Werkzeug- oder Messgerätes und/oder Zusatzinformationen verschlüsselt dargestellt werden. Die Entscheidung, welche Daten des Werkzeug- oder Messgerätes und/oder Zusatzinformationen verschlüsselt werden, wird vorab festgelegt. Jedem Fehlerzustand kann ein Hyperlink als Zusatzinformation zugeordnet werden, wobei die dem Hyperlink zugeordnete Internetseite den Fehlerzustand beschreiben und Maßnahmen zur Fehlerbehebung vorschlagen kann.

Besonders bevorzugt wird die erste Auslösebedingung durch ein internes Ereignis während des Betriebs des Werkzeug- oder Messgerätes ausgelöst und die zweite Auslösebedingung wird durch ein QR-Code-Auslöseelement einer Eingabeeinrichtung des Gerätesystems ausgelöst. Fehlerzustände des Werkzeug-oder Messgerätes stellen die erste Auslösebedingung für das erfindungsgemäße Verfahren dar und der QR-Code wird bei Auftreten eines Fehlerzustandes automatisch ohne Eingriff des Bedieners vom QR-Code-Generator erzeugt. Die Eingabeeinrichtung des Gerätesystems weist mindestens ein QR-Code-Auslöseelement auf, über das der Bediener einen QR-Code erzeugen lassen kann.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform eines erfindungsgemäßen Gerätesystems mit einem Werkzeuggerät, das als Wandsäge ausgebildet ist, und einer Kontrollvorrichtung;
- FIG. 2: eine zweite Ausführungsform eines erfindungsgemäßen Gerätesystems mit einem Messgerät, das als Rotationslaser ausgebildet ist, und einer Kontrollvorrichtung;
- FIG. 3: den Aufbau einer Kontrollvorrichtung für ein erfindungsgemäßes Gerätesystem und das Zusammenwirken der Kontrollvorrichtung mit weiteren Komponenten des Gerätesystems in Form eines Blockdiagramms; und
- FIGN. 4A-D: ein Display und eine Eingabeeinrichtung eines erfindungsgemäßen Gerätesystems in einem Fehlerzustand.

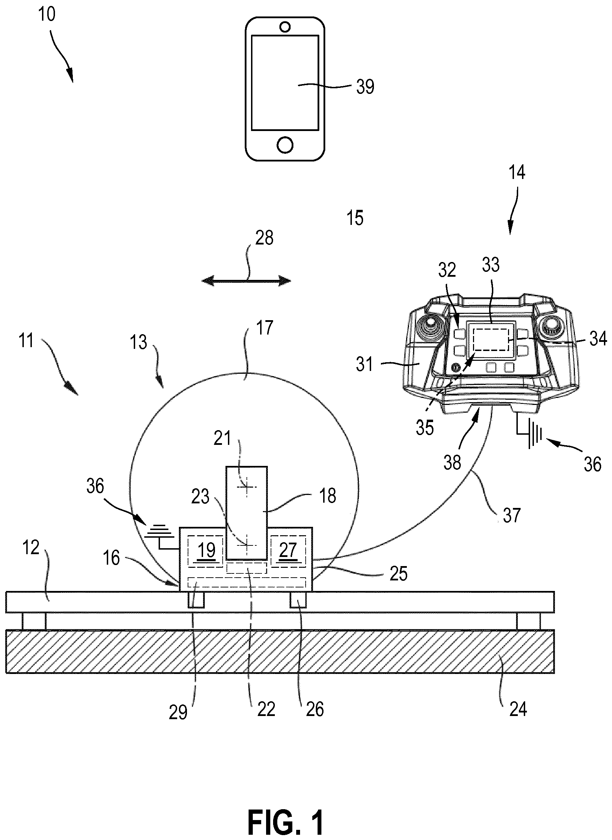

**FIG. 1** zeigt ein erfindungsgemäßes Gerätesystem **10** mit einem Werkzeuggerät **11,** das als Wandsäge ausgebildet ist. Die Wandsäge 11 umfasst eine Führungsschiene **12,** eine an der Führungsschiene 12 verschiebbar angeordnete Bearbeitungs- und Vorschubeinrichtung **13** und eine Fernbedienung **14.** Die Bearbeitungs- und Vorschubeinrichtung 13 umfasst eine Bearbeitungseinrichtung **15** und eine motorische Vorschubeinrichtung **16.** Die Bearbeitungseinrichtung 15 ist als Sägekopf ausgebildet und umfasst ein als Sägeblatt ausgebildetes Bearbeitungswerkzeug **17,** das an einem Sägearm **18** befestigt ist und von einer als Antriebsmotor ausgebildeten Antriebseinrichtung **19** um eine Drehachse **21** angetrieben wird.

Zum Schutz des Bedieners kann das Sägeblatt 17 von einem Sägeblattschutz umgeben sein, der mittels eines Blattschutzhalters am Sägearm 18 befestigt wird. Der Sägearm 18 ist von einem Schwenkmotor **22** um eine Schwenkachse **23** schwenkbar ausgebildet. Der Schwenkwinkel des Sägearms 18 bestimmt mit einem Sägeblattdurchmesser des Sägeblattes 17, wie tief das Sägeblatt 17 in ein zu bearbeitendes Werkstück **24** eintaucht. Der Antriebsmotor 19 und der Schwenkmotor 22 sind in einem Gerätegehäuse **25** angeordnet. Die motorische Vorschubeinrichtung 16 umfasst einen Führungsschlitten **26** und einen Vorschubmotor **27,** der ebenfalls im Gerätegehäuse 25 angeordnet ist. Der Sägekopf 15 ist auf dem Führungsschlitten 26 befestigt und über den Vorschubmotor 27 entlang der Führungsschiene 12 in einer Vorschubrichtung **28** verschiebbar ausgebildet. Im Gerätegehäuse 25 ist neben den Motoren 19, 22, 27 eine Kontrolleinrichtung **29** zur Steuerung des Sägekopfes 15 und der motorischen Vorschubeinrichtung 16 angeordnet.

Die Fernbedienung 14 umfasst ein Gerätegehäuse **31,** eine Eingabeeinrichtung **32,** ein Display **33** und eine Kontrolleinrichtung **34,** die im Inneren des Gerätegehäuses 32 angeordnet ist. Zur Unterscheidung der Kontrolleinrichtungen 29, 34 wird die Kontrolleinrichtung 34 der Fernbedienung 14 im Folgenden als erste Kontrolleinrichtung 34 und die Kontrolleinrichtung 29 der Bearbeitungs- und Vorschubeinrichtung 13 als zweite Kontrolleinrichtung 29 bezeichnet; die erste und zweite Kontrolleinrichtung 34, 29 werden gemeinsam als Kontrollvorrichtung **35** des Gerätesystems 10 bezeichnet.

Die Fernbedienung 14 und die Bearbeitungs- und Vorschubeinrichtung 13 sind über eine draht- und kabellose Kommunikationsverbindung **36** oder ein Kommunikationskabel **37** miteinander verbunden. Im Ausführungsbeispiel ist die draht- und kabellose Kommunikationsverbindung als Funkverbindung 36 ausgebildet, die zwischen einer ersten Funkeinrichtung an der Fernbedienung 14 und einer zweiten Funkeinrichtung an der Bearbeitungs- und Vorschubeinrichtung 13 entsteht. Das Kommunikationskabel 37 wird vor allem eingesetzt, wenn eine draht- und kabellose Kommunikation aus Sicherheitsgründen untersagt ist, wie beispielsweise in Krankenhäusern und auf Flughäfen, oder wenn Störquellen die draht- und kabellose Kommunikation behindern.

Die Fernbedienung 14 ist zusätzlich mit einer Schnittstelleneinrichtung **38** ausgestattet, über die die Fernbedienung 14 mit einer Recheneinrichtung **39** verbunden werden kann. Die Recheneinrichtung 39 kann als Mobilgerät (Smartphone oder Tablet-Computer) oder als PC ausgebildet sein. Im Ausführungsbeispiel ist die Recheneinrichtung 39 als Smartphone ausgebildet.

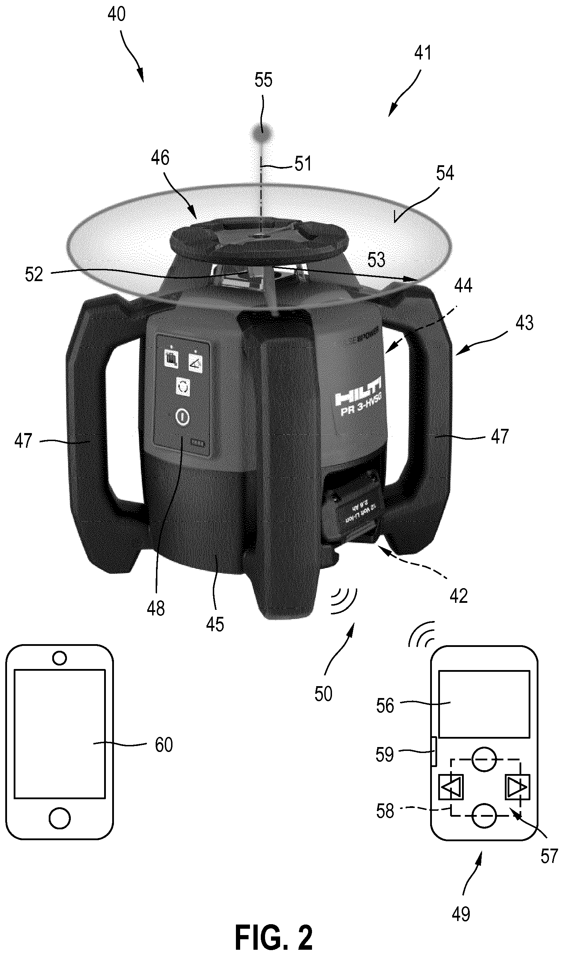

**FIG. 2** zeigt eine zweite Ausführungsform eines erfindungsgemäßen Gerätesystems **40** mit einem Messgerät **41,** das als Rotationslaser ausgebildet ist, und einer Kontrollvorrichtung **42.** Der Rotationslaser 41 umfasst ein Gerätegehäuse **43** und eine im Gerätegehäuse 43 angeordnete Messeinrichtung **44.**

Das Gerätegehäuse 43 des Rotationslasers 41 besteht aus einem Grundgehäuse **45,** einem Rotationskopf **46** und mehreren Handgriffen **47.** Die Bedienung des Rotationslasers 41 erfolgt über eine Eingabeeinrichtung **48,** die in das Grundgehäuse 45 integriert ist und von außen bedienbar ist. Neben der Eingabeeinrichtung 48 kann eine Fernbedienung **49** vorgesehen sein, die über eine Kommunikationsverbindung **50** mit dem Rotationslaser 41 verbindbar ist. Die Kommunikationsverbindung 50 kann als draht- und kabellose Kommunikationsverbindung oder als Kommunikationskabel ausgebildet sein.

Die Messeinrichtung 44 des Rotationslasers 41 erzeugt im Inneren des Grundgehäuses 45 einen Laserstrahl, der auf eine um eine Rotationsachse **51** rotierende Umlenkoptik **52** trifft. Ein erster Teil des Laserstrahls wird von der Umlenkoptik 52 um 90° umgelenkt und bildet einen ersten Laserstrahl **53** des Rotationslasers 11, der eine Laserebene **54** aufspannt. Ein zweiter Teil des Laserstrahls tritt durch die Umlenkoptik 52 hindurch und bildet einen zweiten Laserstrahl **55** des Rotationslasers 11. Abhängig von der Rotationsgeschwindigkeit, mit der der erste Laserstrahl 53 um die Rotationsachse 51 rotiert wird, werden ein Rotationsmodus, ein Linienmodus und ein Punktmodus des Rotationslasers 41 unterschieden. Der erste Laserstrahl 53 bildet ein Messmittel des Rotationslasers 11.

Die Fernbedienung 49 umfasst ein Display **56,** eine Eingabeeinrichtung **57,** eine Speichereinrichtung **58** und eine Schnittstelleneinrichtung **59,** über die die Fernbedienung 49 mit einer Recheneinrichtung **60** verbunden werden kann. Die Recheneinrichtung 60 kann als Mobilgerät (Smartphone oder Tablet-Computer) oder als PC ausgebildet sein.

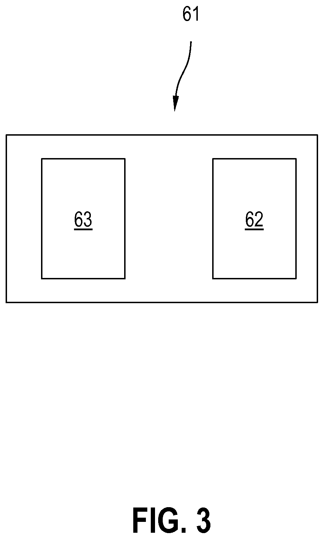

**FIG. 3** zeigt den Aufbau einer Kontrollvorrichtung **61** für ein erfindungsgemäßes Gerätesystem und das Zusammenwirken der Kontrollvorrichtung 61 mit den weiteren Komponenten des Gerätesystems in Form eines Blockdiagramms. Die Kontrollvorrichtung 61 entspricht im Aufbau der Kontrollvorrichtung 35 des erfindungsgemäßen Gerätesystems 10 der FIG. 1 und der Kontrollvorrichtung 42 des erfindungsgemäßen Gerätesystems 40 der FIG. 2.

Die Kontrollvorrichtung 61 umfasst eine Steuer- und/oder Regeleinrichtung **62,** die ein Betriebsprogramm oder mehrere Betriebsprogramme aufweist, und einen QR-Code-Generator **63,** der aktuelle Daten des Werkzeug- oder Messgerätes 11, 41 und/oder Zusatzinformationen in einen QR-Code verschlüsselt. In der Steuer- und/oder Regeleinrichtung 62 sind ein Betriebsprogramm oder mehrere Betriebsprogramme zur Steuerung und/oder Regelung des Werkzeug- oder Messgerätes 11, 41 gespeichert. Der Bediener wählt über die Eingabeeinrichtung 32, 48 des Werkzeug- oder Messgerätes 11, 41 ein Betriebsprogramm aus und legt verschiedene Betriebsparameter des ausgewählten Betriebsprogramms fest. Die eingegebenen Betriebsparameter werden in maschinenlesbare Steuersignale und Daten umgewandelt und steuern und/oder regeln das Werkzeug- oder Messgerät 11, 41.

Ein vom QR-Code-Generator 63 generierter QR-Code kann auf unterschiedliche Weise ausgewertet werden, wobei die technische Ausstattung des Gerätesystems berücksichtigt werden kann. Bei der technischen Ausstattung der Gerätesysteme kann zwischen Gerätesystemen mit einem Display, einer Speichereinrichtung und/oder einer Schnittstelleneinrichtung unterschieden werden.

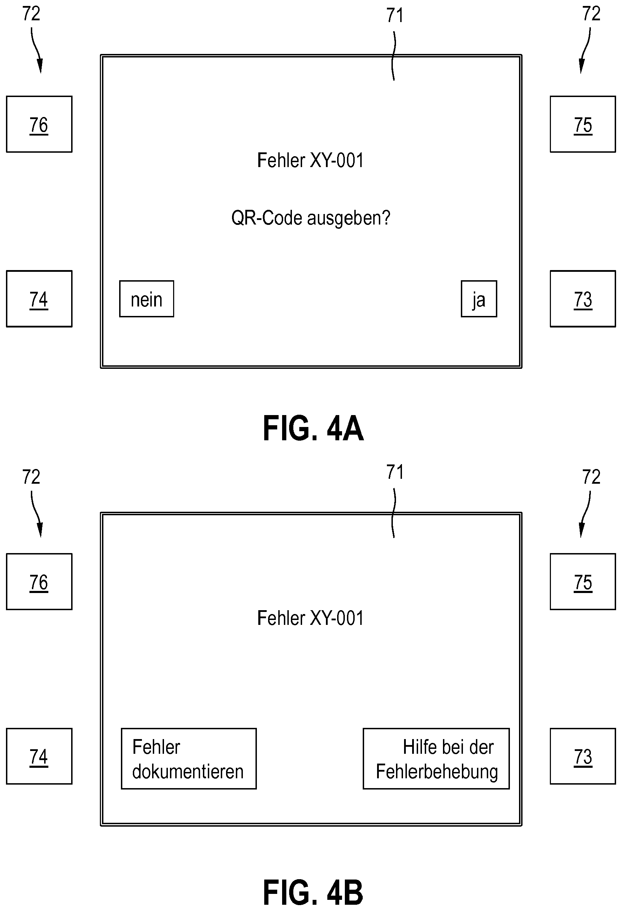

**FIGN. 4A-D** zeigen ein Display **71** und eine Eingabeeinrichtung **72** eines erfindungsgemäßen Gerätesystems in einem Fehlerzustand. Während der Durchführung eines Betriebsprogramms ist ein Fehler XY-001 aufgetreten, der zu einer Unterbrechung des Betriebsprogramms und einer Abschaltung des Werkzeug-oder Messgerätes 11, 41 geführt hat.

Das Display 71 kann ein internes Display des Werkzeug-oder Messgerätes 11, 41 sein oder ein externes Display wird mit dem Werkzeug-oder Messgerät 11, 41 verbunden. Die Gerätesysteme 10, 40 der FIGN. 1, 2 weisen jeweils ein internes Display auf. Die Fernbedienung 14 der Wandsäge 11 und die Fernbedienung 49 des Rotationslasers 41 weisen Displays 33, 56 auf, die einen QR-Code darstellen können. Die Eingabeeinrichtung 72 entspricht beim Gerätesystem 10 der Eingabeeinrichtung 32 der Fernbedienung 14 und beim Gerätesystem 40 der Eingabeeinrichtung 56 der Fernbedienung 49.

In der Kontrollvorrichtung 35, 42 des Werkzeug-oder Messgerätes 11, 41 sind Auslösebedingungen zum Erzeugen eines QR-Codes durch den QR-Code-Generator 62 gespeichert. Bei Eintreten der Auslösebedingung wird ein voreingestellter Satz von aktuellen Daten des Werkzeug- oder Messgerätes 11, 41 vom QR-Code-Generator 62 in einen QR-Code verschlüsselt. Neben den aktuellen Daten können Zusatzinformationen im QR-Code verschlüsselt werden.

FIG. 4A zeigt das Display 71 und die Eingabeeinrichtung 72. Auf dem Display 71 erscheint ein Dialogfeld, über das der Bediener die weiteren Schritte bestimmen kann. Die Eingabeeinrichtung 72 umfasst vier Bedienelemente, die sich kontextabhängig verändern. Dazu gehören ein erstes Bedienelement **73,** ein zweites Bedienelement 74, ein drittes Bedienelement **75** und ein viertes Bedienelement **76.** Das Auftreten des Fehlers XY-001 führt im Ausführungsbeispiel der FIG. 4A dazu, dass ein Dialogfeld erscheint und der Bediener entscheiden kann, ob ein QR-Code ausgegeben werden soll. Das erste Bedienelement 73 entspricht der Antwort "ja" und das zweite Bedienelement 74 entspricht der Antwort "nein".

Beim Betätigen des ersten Bedienelementes 73 erscheint ein weiteres Dialogfeld (FIG. 4B). Der Bediener kann entscheiden, ob der Fehler dokumentiert wird oder Hilfe bei der Fehlerbehebung erfolgen soll. Das erste Bedienelement 73 entspricht der Auswahl "Fehler beheben" und das zweite Bedienelement 74 entspricht der Auswahl "Hilfe bei der Fehlerbehebung". Das erste Bedienelement 73 stellt ein erstes QR-Code-Auslöseelement dar und das zweite Bedienelement 74 stellt ein zweites QR-Code-Auslöseelement dar. Dem ersten QR-Code-Auslöseelement 73 sind erste Daten des Werkzeug-oder Messgerätes 11, 41 und/oder erste Zusatzinformationen zugeordnet und dem zweiten QR-Code-Auslöseelement 74 sind zweite Daten des Werkzeug-oder Messgerätes 11, 41 und/oder zweite Zusatzinformationen zugeordnet.

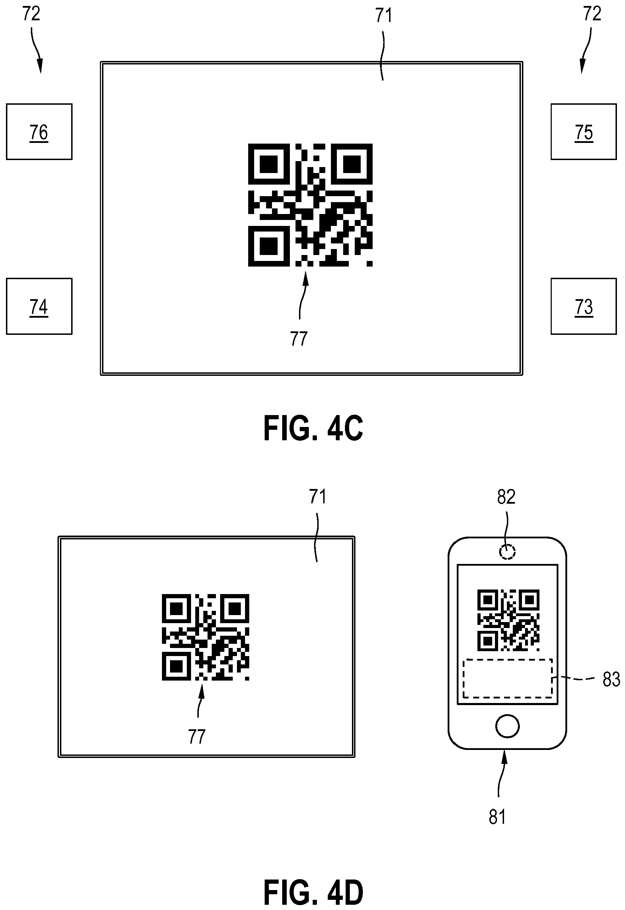

Beim Betätigen des ersten QR-Code-Auslöseelementes 73 erzeugt der QR-Generator 62 einen QR-Code **77.** Der QR-Code 77 wird vom QR-Generator 62 an das Display 71 weitergeleitet und auf dem Display 71 grafisch dargestellt (FIG. 4C). Der Bediener kann den dargestellten QR-Code 77 mit einem Smartphone **81,** das eine QR-Code-Leseeinrichtung **82** aufweist, einscannen und anschließend mit einer QR-Code-Auswerteeinrichtung **83** entschlüsseln (FIG. 4D). Der entschlüsselte QR-Code enthält beispielsweise einen Hyperlink auf eine Hilfeseite, die den Bediener bei der Fehlerbehebung am Werkzeug- oder Messgerät 11, 41 unterstützt.

Die wichtigsten Auslöseereignisse sind Fehlerzustände des Werkzeug-oder Messgerätes 11, 41 und QR-Codes können den Bediener bei der Fehlerbehebung unterstützen. FIGN. 4A-D zeigen eine Variante, in der bei Auftreten eines Fehlerzustandes ein Dialogfeld erscheint und der Bediener entscheidet, ob ein QR-Code generiert werden soll. Alternativ kann bei Auftreten eines Fehlerzustandes automatisch, d.h. ohne Eingriff des Bedieners, vom QR-Code-Generator 62 ein QR-Code erzeugt werden, wobei im QR-Code aktuelle Daten des Werkzeug- oder Messgerätes 11, 41 und/oder Zusatzinformationen verschlüsselt dargestellt sind. Die Entscheidung, welche Daten des Werkzeug- oder Messgerätes 11, 41 und/oder Zusatzinformationen verschlüsselt werden, wurde vorab getroffen und ist festgelegt. Wenn der QR-Code automatisch generiert wird, stellt jeder Fehlerzustand eine Auslöseereignis dar, wobei jedem Auslöseereignis ein Satz von Daten des Werkzeug- oder Messgerätes 11, 41 und/oder Zusatzinformationen zugeordnet wird. Jedem Fehlerzustand kann ein Hyperlink als Zusatzinformation zugeordnet werden, wobei die dem Hyperlink zugeordnete Internetseite den Fehlerzustand beschreiben und Maßnahmen zur Fehlerbehebung vorschlagen kann.

## Patentansprüche

1. Gerätesystem (10; 40) mit einem Werkzeuggerät (11) oder einem Messgerät (41), aufweisend:
▪ eine Antriebseinrichtung (19), die ein Bearbeitungswerkzeug (17) antreibt, oder eine Messeinrichtung (44), die ein Messmittel (53) betreibt,
▪ eine Kontrollvorrichtung (35; 42; 61) mit einer Steuer- und/oder Regeleinrichtung (62), die mindestens ein Betriebsprogramm zur Steuerung und/oder Regelung der Antriebseinrichtung (19) des Werkzeuggerätes (11) oder der Messeinrichtung (44) des Messgerätes (41) aufweist, und
▪ eine Eingabeeinrichtung (32; 48, 57; 72), die zur Eingabe von Betriebsparametern für das mindestens eine Betriebsprogramm und/oder zum Ein- und Ausschalten des Werkzeug- oder Messgerätes (11; 41) ausgebildet ist,
**dadurch gekennzeichnet, dass** die Kontrollvorrichtung (35; 42; 61) des Gerätesystems (10; 40) einen QR-Code-Generator (63) aufweist, der aktuelle Daten des Werkzeug- oder Messgerätes (11; 41) und/oder Zusatzinformationen in einen QR-Code (77) verschlüsselt.

2. Gerätesystem nach Anspruch 1, **dadurch gekennzeichnet, dass** das Gerätesystem (10; 40) ein Display (33; 56; 71) aufweist, wobei das Display (33; 56; 71) mit der Kontrollvorrichtung (35; 42; 61) dauerhaft verbunden oder zumindest zeitweise verbindbar ist und der QR-Code (77) auf dem Display (33; 56; 71) darstellbar ist.

3. Gerätesystem nach einem der Ansprüche 1 bis 2, **dadurch gekennzeichnet, dass** das Gerätesystem (40) eine Speichereinrichtung (58) aufweist, wobei die Speichereinrichtung (58) mit der Kontrollvorrichtung (42) dauerhaft verbunden oder zumindest zeitweise verbindbar ist.

4. Gerätesystem nach einem der Ansprüche 1 bis 3, **dadurch gekennzeichnet, dass** das Gerätesystem (10; 40) eine Schnittstelleneinrichtung (38; 59), die mit der Kontrollvorrichtung (35; 42; 61) verbunden ist, aufweist, wobei die Kontrollvorrichtung (35; 42; 61) über die Schnittstelleneinrichtung (38; 59) mit einer Recheneinrichtung (39; 60) verbindbar ist.

5. Gerätesystem nach Anspruch 1, **dadurch gekennzeichnet, dass** die Eingabeeinrichtung (32; 57; 72) mindestens ein QR-Code-Auslöseelement (73, 74) aufweist, wobei dem mindestens einen QR-Code-Auslöseelement (73, 74) ein voreingestellter Satz von Daten des Werkzeug- oder Messgerätes (11; 41) und/oder Zusatzinformationen zugeordnet sind.

6. Gerätesystem nach Anspruch 5, **dadurch gekennzeichnet, dass** die Eingabeeinrichtung (32; 57; 72) ein erstes QR-Code-Auslöseelement (73) und ein zweites QR-Code-Auslöseelement (74) aufweist, wobei dem ersten QR-Code-Auslöseelement (73) ein erster Satz von Daten des Werkzeug- oder Messgerätes (11; 41) und/oder erste Zusatzinformationen zugeordnet ist und dem zweiten QR-Code-Auslöseelement (74) ein zweiter Satz von Daten des Werkzeug- oder Messgerätes (11; 41) und/oder zweite Zusatzinformationen zugeordnet ist.

7. Verfahren zur Überwachung eines Gerätesystems (10; 40), das ein Werkzeuggerät (11) mit einer Antriebseinrichtung (19) oder ein Messgerät (41) mit einer Messeinrichtung (44) umfasst, mit den Schritten:
▪ in einer Kontrollvorrichtung (35; 42; 61) des Gerätesystems (10; 40) wird mindestens eine Auslösebedingung zum Erzeugen eines QR-Codes durch einen QR-Code-Generator (62) gespeichert und
▪ bei Eintreten der mindestens einen Auslösebedingung wird ein voreingestellter Satz von aktuellen Daten des Werkzeug- oder Messgerätes (11; 41) und/oder Zusatzinformationen vom QR-Code-Generator (62) in einem QR-Code (77) verschlüsselt.

8. Verfahren nach Anspruch 7, **dadurch gekennzeichnet, dass** der QR-Code (77) an ein Display (33; 56; 71) des Gerätesystems (10; 40), das mit der Kontrollvorrichtung (35; 42; 61) dauerhaft verbunden oder zumindest zeitweise verbindbar ist, übermittelt wird und auf dem Display (33; 56; 71) grafisch dargestellt wird.

9. Verfahren nach Anspruch 8, **dadurch gekennzeichnet, dass** der auf dem Display (33; 56; 71) grafisch dargestellte QR-Code (77) mittels einer QR-Code-Leseeinrichtung (82) gescannt wird und der gescannte QR-Code von einer QR-Code-Auswerteeinrichtung (83) entschlüsselt wird.

10. Verfahren nach Anspruch 7, **dadurch gekennzeichnet, dass** der QR-Code an eine Speichereinrichtung (58) des Gerätesystems (40), die mit der Kontrollvorrichtung (42) dauerhaft verbunden oder zumindest zeitweise verbindbar ist, übermittelt wird und in der Speichereinrichtung (58) gespeichert wird.

11. Verfahren nach Anspruch 7, **dadurch gekennzeichnet, dass** der QR-Code über eine Schnittstelleneinrichtung (38; 59) des Gerätesystems (10; 40), die mit der Kontrollvorrichtung (35; 42; 61) verbunden ist, an eine Recheneinrichtung (39; 60) übermittelt wird.

12. Verfahren nach Anspruch 7, **dadurch gekennzeichnet, dass** in der Kontrollvorrichtung (35; 42; 61) des Gerätesystems (10; 40) eine erste Auslösebedingung und eine zweite Auslösebedingung gespeichert werden, wobei der ersten Auslösebedingung ein erster Satz von Daten des Werkzeug- oder Messgerätes (11; 41) und/oder erste Zusatzinformationen zugeordnet werden und der zweiten Auslösebedingung ein zweiter Satz von Daten des Werkzeug- oder Messgerätes (11; 41) und/oder zweite Zusatzinformationen zugeordnet werden.

13. Verfahren nach Anspruch 12, **dadurch gekennzeichnet, dass** die erste Auslösebedingung durch ein internes Ereignis während des Betriebs des Werkzeug- oder Messgerätes (11; 41) ausgelöst wird und die zweite Auslösebedingung durch ein QR-Code-Auslöseelement (73, 74) einer Eingabeeinrichtung (32; 57; 72) des Gerätesystems (10; 40) ausgelöst wird.
